# DEMANDE DE BREVET EUROPEEN

(11) **EP 4 175 166 A1**
(43) Date de publication de la demande: **03.05.2023**
(21) Numéro de dépôt: 22204150.1
(22) Date de dépôt: 27.10.2022
(51) Int. Cl.: H02S 20/32

(54) **SYSTÈME DE GUIDAGE EN ROTATION D'UN SUIVEUR SOLAIRE**

(30) Priorité: 28.10.2021 FR 2111493
(71) Demandeur: Nexans, 92400 Courbevoie (FR)
(72) Inventeur: CHARTIER, Emilie, 13090 AIX EN PROVENCE (FR); AMAR, Jérémy, 13290 LES MILLES (FR); PRINTEMPS, Morgan, 13600 LA CIOTAT (FR); QUEVILLIER, Ludovic, 13400 AUBAGNE (FR); RICHARD, Aymeric, 13770 VENELLES (FR); GILLET, Lucas, 83640 SAINT ZACHARIE (FR); SOULIE, Emile, 13650 MEYRARGUES (FR)
(74) Mandataire: Ipsilon

(57) **Abrégé**

Système (1) de guidage en rotation d'un suiveur solaire, comportant :
- au moins un arceau (2) montable sur le suiveur solaire et mobile en rotation autour d'un axe de rotation (100),
- au moins deux dispositifs de guidage (3) configurés pour guider en rotation l'arceau (2).

## Description

### Domaine technique

La présente invention concerne de manière générale le guidage en rotation des suiveurs solaires et plus particulièrement un système de guidage en rotation d'un suiveur solaire et un suiveur solaire comportant ledit système de guidage en rotation.

### Arrière-plan technologique

EP2864719 décrit un suiveur solaire monté mobile en rotation sur un bâti et comportant un système de mise en mouvement de rotation du suiveur solaire, ledit système comportant un arceau monté sur le suiveur solaire et comprenant une crémaillère, et une vis sans fin coopérant avec la crémaillère afin de réaliser le mouvement de rotation. Un tel suiveur solaire ne comporte pas de système de guidage en rotation du suiveur solaire.

Un guidage en rotation du suiveur solaire permet un mouvement de rotation contrôlé et précis du suiveur solaire.

On connait du document EP3501098 une autre structure de suiveur solaire comportant un dispositif mobile comportant une structure de support en treillis rigide qui s'étend longitudinalement selon l'axe de pivotement du dispositif mobile, et sur laquelle est fixée une pluralité de panneaux solaires dans un même plan. Dans un mode de réalisation préféré, la structure de support en treillis rigide est fixée uniquement aux deux arceaux qui s'étendent dans un plan perpendiculaire à l'axe de pivotement, de sorte que les deux arceaux constituent deux uniques supports pour la structure de support en treillis rigide. Chacun des deux arceaux repose en en outre sur un berceau de guidage en rotation de l'arceau correspondant, et chaque berceau de guidage est fixé en partie supérieure d'un premier appui au sol. Le poids du dispositif mobile est ainsi distribué sur seulement deux appuis au sol, via les deux arceaux de support. Avec une telle structure, on peut obtenir avantageusement des suiveurs solaires de grande dimension (typiquement une structure de support en treillis rigide présentant une longueur comprise entre 40 et 60 mètres et une largeur d'environ 5 mètres), avec seulement deux arceaux de support d'environ 2 mètres de diamètre séparés d'une distance environ égale à la moitié de la longueur de la structure de support, par exemple comprise entre 20 et 30 mètres, et deux appuis au sol. Les berceaux de guidage comportent chacun deux dispositifs de guidage comportant chacun, d'une part, des galets supérieurs, et d'autre part, des galets inférieures supportant l'arceau. Les galets supérieurs et inférieurs de chaque dispositif de guidage forment un organe de roulement et sont configurés pour rouler sur une bande de roulement portée par chaque arceau. Chaque arceau comporte sur son bord radialement externe des extensions latérales de part et d'autre de l'arceau configurées pour s'insérer entre les galets supérieurs et inférieurs de support de façon à permettre un guidage en rotation de l'arceau. Un tel guidage conduit à des phénomènes d'usure prématurée des arceaux au niveau des zones où les galets inférieurs sont en contact avec les arceaux. En effet, tout le poids du dispositif mobile et des arceaux est distribué sur les galets inférieurs ce qui génère des pressions élevées de contact entre les galets inférieurs et les arceaux.

Un but de la présente invention est d'améliorer les systèmes de guidage en rotation des suiveurs solaires, notamment celui décrit dans le document EP3501098, avec notamment pour but de mieux répartir les efforts s'exerçant sur les dispositifs de guidage et leurs galets.

### Résumé de l'invention

A cette fin, selon un premier aspect, la présente invention a pour objet un système de guidage en rotation d'un suiveur solaire, comportant :
- au moins un arceau montable sur le suiveur solaire et mobile en rotation autour d'un axe de rotation,
- au moins deux dispositifs de guidage configurés pour guider en rotation l'arceau,
   les dispositifs de guidage comportant chacun au moins deux galets chacun mobile en rotation autour d'un axe de rotation s'étendant selon la direction de l'axe de rotation de l'arceau et configuré pour venir en contact et supporter l'arceau,
   les dispositifs de guidage étant chacun mobile en rotation autour d'un axe de rotation s'étendant selon la direction de l'axe de rotation de l'arceau, et pouvant chacun être entrainé en rotation par l'arceau de façon à permettre le contact de chaque galet de chaque dispositif de guidage avec l'arceau.

Afin de se maintenir en équilibre statique, chaque dispositif de guidage peut être mis en rotation autour de son axe de rotation par les efforts exercés par l'arceau sur les dispositifs de guidage. De tels dispositifs de guidage peuvent ainsi être qualifiés de structures hypostatiques.

L'utilisation de dispositifs de guidage qui sont eux-mêmes mobiles en rotation autour de leur axe de rotation permet de mieux répartir les efforts sur les dispositifs de guidage, notamment sur les galets des dispositifs de guidage. En d'autres termes, en raison du fait que la rotation de chaque dispositif de guidage autour de son axe de rotation est permise, le positionnement du dispositif de guidage, et notamment des galets au contact de l'arceau, est optimisé ce qui permet une pression de l'arceau qui est sensiblement uniformément répartie sur chacun des dispositifs de guidage, en particulier sur chacun des galets des dispositifs de guidage. Cela peut permettre de limiter la pression de contact de l'arceau sur les galets, et donc de limiter l'usure de l'arceau résultant du contact entre l'arceau et les galets.

D'autre part, de tels dispositifs de guidage qui sont eux-mêmes mobiles en rotation autour de leur axe de rotation peuvent d'adapter aisément à différents arceaux ayant des diamètres ou des courbures différentes.

Le fait que les dispositifs de guidage soient chacun mobile en rotation autour d'un axe de rotation s'étendant selon la direction de l'axe de rotation de l'arceau permet de maintenir au contact de l'arceau les galets de chaque dispositif de guidage.

La rotation de chaque dispositif de guidage autour de son axe de rotation permet en effet de garantir que chaque galet des dispositifs de guidage est au contact de l'arceau. Un dispositif de guidage hyperstatique, i.e. qui n'est pas mobile en rotation, ne permettrait pas l'appui de l'arceau sur chacun des galets des dispositifs de guidage.

### Arceau

L'axe de rotation de l'arceau est de préférence identique à celui du suiveur solaire.

L'arceau s'étend de préférence dans un plan perpendiculaire à son axe de rotation.

L'arceau peut comporter un profilé courbe, de préférence en forme de demi-cercle. Le diamètre de l'arceau peut être compris entre 1,8 et 2,5 mètres, et notamment être égal à environ 2,2 mètres.

L'arceau peut être montable sur le suiveur solaire au moins par ses extrémités.

### Bande de roulement

L'arceau peut comporter une bande de roulement et le ou les galets de chaque dispositif de guidage peuvent être configurés pour venir en contact avec la bande de roulement de l'arceau. Comme déjà mentionné précédemment, le système selon l'invention peut permettre de limiter l'usure de la bande de roulement de l'arceau résultant du contact entre les galets et la bande de roulement de l'arceau.

La rotation de chaque dispositif de guidage autour de son axe de rotation peut permettre de maintenir au contact de la bande de roulement de l'arceau le ou les galets de chaque dispositif de guidage.

La bande de roulement est de préférence située sur un bord radialement externe de l'arceau.

### Galet

Les galets sont de préférence cylindriques.

Les galets peuvent présenter une forme allongée le long de leur axe de rotation. Ils peuvent présenter une largeur sensiblement égale à celle de la bande de roulement de l'arceau, par exemple une largeur comprise entre 80 et 110 mm. Une forme allongée permet d'accroître la surface de contact entre le galet et l'arceau et donc de diminuer la pression de contact de l'arceau sur le galet.

Les galets peuvent présenter par exemple un diamètre interne compris entre 18 et 30 mm et un diamètre externe compris entre 50 et 100 mm.

Les galets peuvent comporter une surface de roulement configurée pour venir en contact avec la bande de roulement de l'arceau.

Les galets peuvent être entièrement réalisés dans un matériau composite et/ou à base de polymères, par exemple un matériau à base de plastique, y compris leurs surfaces de roulement.

Les galets sont de préférence montés libres en rotation autour de leur axe de rotation.

Les axes de rotation des galets de chaque dispositif de guidage sont de préférence strictement parallèles.

La distance entre les axes de rotation des galets de chaque dispositif de guidage peut être comprise entre 150 et 200 mm.

### Dispositif de guidage

Les dispositifs de guidage sont disposés en série le long de l'arceau.

Les dispositifs de guidage sont de préférence alignés l'un par rapport à l'autre le long de l'axe d'un axe compris dans le plan dans lequel s'étend l'arceau.

La distance entre les axes de rotation des dispositifs de guidage peut être comprise entre 800 et 1000 mm.

Les dispositifs de guidage sont de préférence chacun monté libre en rotation autour de leur axe de rotation.

Les dispositifs de guidage peuvent être montés, de préférence au niveau de leur axe de rotation, sur une même structure de support s'étendant selon une direction perpendiculaire à la direction de l'axe de rotation de l'arceau. Cela peut permettre d'aligner les dispositifs de guidage l'un par rapport à l'autre de manière à permettre le guidage en rotation de l'arceau.

La structure de support est par exemple une barre ou un tube, de préférence rectiligne et/ou de section circulaire.

La longueur de la structure de support peut être comprise entre 1000 et 1300 mm.

La structure de support peut être montable sur une partie supérieure d'une structure d'appui au sol.

La structure d'appui au sol peut comporter un ou plusieurs pieux battus, forés ou vissés, notamment deux pieux battus, forés ou vissés, ou un bloc béton. En variante, elle comporte un châssis intermédiaire qui repose sur un ou plusieurs pieux battus, notamment sur deux pieux battus, ou sur un bloc béton.

La structure de support est de préférence suffisamment rigide pour supporter les efforts du suiveur solaire.

Avantageusement, la structure de support est mobile en rotation autour de son axe d'extension qui est perpendiculaire à la direction de l'axe de rotation de l'arceau. La rotation de la structure de support autour de son axe d'extension peut permettre de compenser les irrégularités statiques du sol, et notamment permettre l'installation du suiveur solaire sur un sol en pente. Cela peut ainsi permettre une orientation angulaire précise du suiveur solaire autour d'un axe de rotation s'étendant dans une direction perpendiculaire à l'axe de rotation de l'arceau.

La structure de support peut être monté libre en rotation autour de son axe d'extension.

Par exemple, la structure de support est fixée à chacune de ses extrémités à la structure d'appui au sol par un collier de serrage.

Avantageusement, le serrage du collier est tel qu'il permet à la structure de support d'être libre en rotation autour de son axe d'extension.

### Butée latérale

Les dispositifs de guidage peuvent comporter chacun au moins deux butées latérales situées de part et d'autre de l'arceau et l'arceau peut comporter des extensions latérales de part et d'autre de l'arceau disposées entre les butées latérales et les galets des dispositifs de guidage.

Les extensions latérales de l'arceau sont ainsi prises en sandwich entre les butées latérales et les galets des dispositifs de guidage. La présence des butées latérales peuvent permettent d'éviter le soulèvement de l'arceau, par exemple causé par la force du vent, car les extensions latérales de l'arceau viennent alors en appui contre les butées latérales des dispositifs de guidage.

Lors de la rotation de l'arceau autour de son axe de rotation, les extensions latérales de l'arceau peuvent venir glisser contre les butées latérales des dispositifs de guidage.

Les butées latérales sont de préférence dans un matériau composite et/ou à base de polymères, par exemple un matériau à base de plastique.

Les butées latérales sont de préférence situées en regard des flancs de l'arceau.

Les extensions latérales s'étendent de préférence sur au moins plus de la moitié, notamment sur au moins plus des trois-quarts, voire sur sensiblement toute la longueur de l'arceau.

Les extensions latérales peuvent être de faible épaisseur, par exemple comprise entre 3 et 5 mm, voire d'épaisseur plus importante, par exemple comprise entre 5 et 8 mm.

Les extensions latérales peuvent venir s'insérer dans le prolongement du bord radialement externe de l'arceau ou au niveau des flancs de l'arceau.

Les butées latérales de chaque dispositif de guidage peuvent comporter chacune au moins une roulette de guidage axial mobile en rotation autour d'un axe de rotation s'étendant selon une direction perpendiculaire à la direction de l'axe de rotation de l'arceau et configurée pour venir en contact avec les flancs de l'arceau. La présence de roulettes de guidage axial peut permettre de guider axialement l'arceau de manière à le maintenir centré entre les deux butées latérales de chaque dispositif de guidage. D'autre part, ces roulettes de guidage axial peuvent permettre de reprendre les efforts axiaux du suiveur solaire, notamment quand le suiveur solaire est installé dans une pente.

Les roulettes de guidage axial des butées latérales sont de préférence montées libre en rotation.

Les dispositifs de guidage peuvent être chacun mobile en translation le long de leur axe de rotation. Cela peut permettre de rattraper la dilatation thermique du suiveur solaire qui peut avoir lieu par exemple entre l'hiver et l'été. Ce mouvement de translation du dispositif de guidage permet donc de limiter les efforts liés à la dilatation thermique du suiveur solaire.

Les dispositifs de guidage peuvent être chacun mobile en translation dans les deux sens par rapport à l'axe d'extension de la structure de support. Le mouvement de translation de chacun des dispositifs de guidage est de préférence guidé le long de leur axe de de rotation.

Les dispositifs de guidage peuvent chacun comporter autour de leur axe de rotation une paire de paliers lisses, notamment à collerettes. L'utilisation de paliers lisses peut faciliter la translation et la rotation des dispositifs de guidage.

Les paliers lisses sont de préférence dans un matériau composite et/ou à base de polymères, notamment dans un matériau à base de plastique. Par exemple, les paliers lisses peuvent être entièrement à base de polymères ou être en dans un matériau métallique, notamment en bronze, qui est revêtu d'une couche à base de polymères. Cela peut permettre d'éviter l'utilisation de graisse tout en assurant une stabilité mécanique élevée et un coefficient de frottement limité.

L'amplitude du mouvement de translation de chacun des dispositifs de guidage le long de leur axe de rotation peut être comprise entre 10 et 70 mm, de préférence entre 20 et 60 mm.

La présente invention a encore pour objet un suiveur solaire comportant :
- au moins un système de guidage en rotation tel que défini ci-dessus,
- au moins une table équipée d'au moins un dispositif de collecte d'énergie solaire, la table s'étendant longitudinalement selon la direction de l'axe de rotation de l'arceau,
- au moins une structure de soutien, notamment une poutre en treillis, s'étendant longitudinalement selon la direction de l'axe de rotation de l'arceau et supportant, notamment à elle seule, ladite table,
   l'arceau étant monté sur la structure de soutien de façon à entrainer en rotation la structure de soutien autour de l'axe de rotation de l'arceau.

Dans un mode de réalisation préféré, le suiveur solaire comporte au moins deux systèmes de guidage en rotation tels que définis ci-dessus et chaque arceau est monté sur la structure de soutien de façon à entrainer en rotation la structure de soutien autour de l'axe de rotation des arceaux.

La table est de préférence équipée d'une pluralité de panneaux solaires dans un même plan.

La structure de soutien est de préférence suffisamment rigide pour supporter la table.

Le ou les arceaux peuvent être configurés pour supporter la structure de soutien. En d'autres termes, le ou les arceaux constituent le ou les seuls supports pour la structure de soutien.

Le suiveur solaire peut comporter en outre un système d'entrainement configuré pour entrainer en rotation l'arceau autour de son axe de rotation.

Lorsque le suiveur solaire comporte au moins deux systèmes de guidage en rotation, les arceaux présentent de préférence des axes de rotation identiques et sont de préférence situés dans des plans parallèles.

La présente invention a encore pour objet un champ solaire comportant une pluralité de suiveurs solaires tels que définis ci-dessus.

Au moins certains suiveurs solaires peuvent être disposés parallèlement les uns aux autres, notamment selon la direction Nord/Sud.

### Brève description des dessins

L'invention pourra être mieux comprise à la lecture de la description détaillée qui va suivre, d'un exemple de mise en œuvre non limitatif de celle-ci, et à l'examen du dessin annexé, sur lequel :
[Fig. 1] la figure 1 représente de façon schématique un exemple de système de guidage en rotation d'un suiveur solaire selon l'invention,
[Fig. 2] la figure 2 représente de façon schématique et en perspective, une vue partielle d'un exemple de système de guidage en rotation d'un suiveur solaire selon l'invention,
[Fig. 3] la figure 3 représente de façon schématique et en perspective, une vue partielle d'un exemple de système de guidage en rotation d'un suiveur solaire selon l'invention,
[Fig. 4a] la figure 4a représente une coupe transversale d'un arceau coopérant avec un dispositif de guidage,
[Fig. 4b] la figure 4b représente une variante de l'arceau coopérant avec le dispositif de guidage représenté à la figure 4a,
[Fig. 4c] la figure 4c représente une autre variante de l'arceau coopérant avec le dispositif de guidage représenté à la figure 4a,
[Fig. 5] la figure 5 représente de façon schématique et en perspective un détail du système de guidage en rotation d'un suiveur solaire selon l'invention,
[Fig. 6] la figure 6 représente de façon schématique et en perspective un autre détail du système de guidage en rotation d'un suiveur solaire selon l'invention,
[Fig. 7] la figure 7 représente de façon schématique et en perspective un détail du système de guidage représenté à la figure 6,
[Fig. 8] la figure 8 représente de façon schématique, partielle et en perspective, un exemple de suiveur solaire selon l'invention.

### Description de mode(s) de réalisation

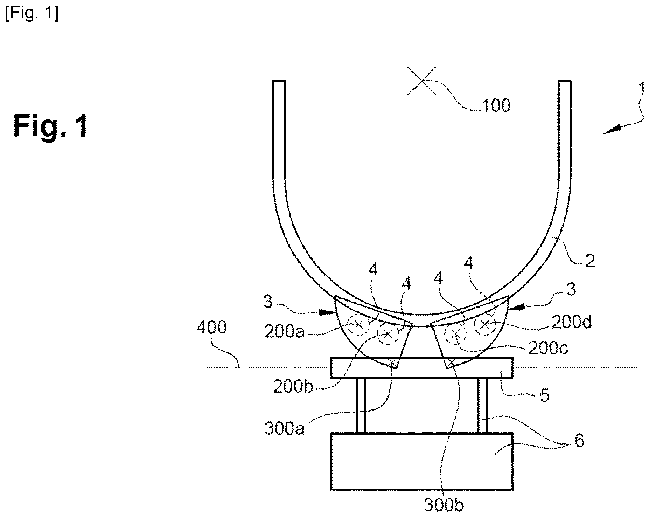

Le système 1 de guidage en rotation représenté sur la figure 1 comporte un arceau 2 montable sur un suiveur solaire (non représenté) et mobile en rotation autour d'un axe de rotation 100 et deux dispositifs de guidage 3 configurés pour guider en rotation l'arceau 2 autour de son axe de rotation 100. Ainsi, l'arceau 2 est configuré pour coopérer avec deux dispositifs de guidage 3.

Les dispositifs de guidage 3 comportent chacun au moins deux galets 4 chacun mobile en rotation autour d'un axe de rotation 200a, 200b, 200c, 200d s'étendant selon la direction de l'axe de rotation 100 de l'arceau 2 et configuré pour venir en contact et supporter l'arceau 2.

De préférence, les galets 4 sont montés libres en rotation.

Les dispositifs de guidage 3 sont chacun mobile en rotation autour d'un axe de rotation 300a, 300b s'étendant selon la direction de l'axe de rotation 100 de l'arceau 2. Ainsi, chaque dispositif de guidage 3 peut être entrainé en rotation autour de son axe de rotation 300a, 300b par l'arceau 2 de façon à permettre le contact de chaque galet 4 de chaque dispositif de guidage 3 avec l'arceau 2.

De préférence, les dispositifs de guidage 3 sont montés libres en rotation.

Les dispositifs de guidage 3 sont montés sur une même structure de support 5 s'étendant selon une direction perpendiculaire à la direction de l'axe de rotation 100 de l'arceau 2.

La structure de support 5 est donc configurée pour supporter les dispositifs de guidage 3 et l'arceau 2.

La structure de support 5 peut être montée sur une partie supérieure d'une structure d'appui au sol 6.

L'arceau 2 est de préférence montable au moins à chacune de ses extrémités à l'ossature du suiveur solaire. Il peut ainsi constituer un unique support pour le suiveur solaire.

L'arceau forme de préférence un arc-de-cercle, notamment un demi-cercle, dont le centre est sur l'axe de rotation 100 de l'arceau 2.

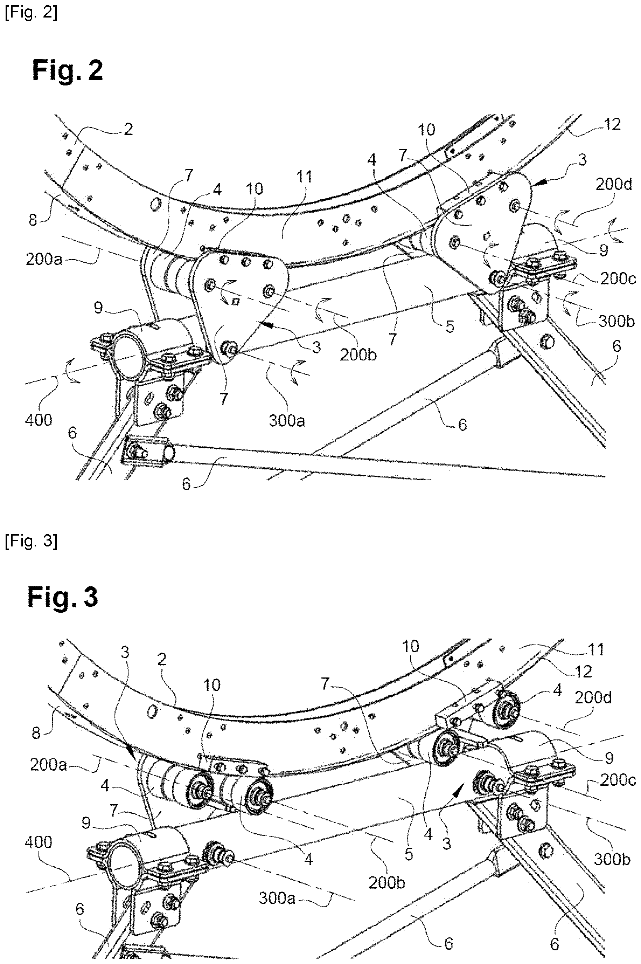

En référence aux figures 2 et 3, nous allons maintenant décrire plus en détails les dispositifs de guidage 3 du système 1 de guidage en rotation selon l'invention.

Chaque dispositif de guidage 3 comporte deux plaques de montage 7, de préférence parallèles entre elles, situées de part et d'autre de l'arceau 2, entre lesquelles les galets 4 sont montés mobiles en rotation autour de leurs axes de rotation respectifs 200a, 200b, 200c et 200d.

Les galets 4 sont situés au niveau de la partie supérieure des dispositifs de guidage 3.

Les galets 4 sont configurés pour venir au contact avec une bande de roulement 8 de l'arceau 2 qui est située sur un bord radialement externe de l'arceau 2 et pour supporter l'arceau 2. Ainsi, les galets 4 peuvent être entraînés en rotation autour de leurs axes de rotation respectifs 200a, 200b, 200c et 200d par la rotation du l'arceau 2 autour de son axe de rotation 100.

La structure de support 5 sur laquelle repose les dispositifs de guidage 3 est situé au niveau de la partie inférieure des dispositifs de guidage 3. La structure de support 5 vient ainsi s'insérer entre les deux plaques de montage 7 de chaque dispositif de guidage 3.

Dans l'exemple illustré à la figure 2, les plaques de montage 7 des dispositifs de guidage 3 sont de forme triangulaire, avec un sommet orienté vers le sol, au niveau duquel est situé la structure de support 5, et un côté opposé audit sommet orienté vers l'arceau 2, au niveau duquel sont situés les galets 4.

Des orifices traversants ménagés dans la structure de support 5 permettent de monter les dispositifs de guidage 3 mobiles en rotation autour de leurs axes de rotation respectifs 300a, 300b.

Les efforts exercés par l'arceau 2 sur les dispositifs de guidage 3 permettent d'entrainer ces derniers en rotation autour de leurs axes de rotation respectifs 300a, 300b de manière à ce que les galets 4 de chaque dispositif de guidage 3 viennent chacun au contact de la bande de roulement 8 de l'arceau 2.

Comme on peut le voir sur les figures 2 et 3, la structure de support 5 est montée sur la partie supérieure de la structure d'appui au sol 6 qui est dans cet exemple un châssis intermédiaire reposant soit sur des pieux battus, soit sur un bloc béton (non représenté). Dans une variante non représentée, la structure de support 5 repose directement sur des pieux battus ou un bloc béton.

La structure de support 5 peut être un tube ou une barre rectiligne, par exemple de section circulaire. Elle est de préférence suffisamment rigide pour supporter les dispositifs de guidage 3 et l'arceau 2.

La structure de support 5 est fixée à chacune de ses extrémités à la structure d'appui au sol 6 par des colliers 9 de serrage.

Avantageusement, au moment du montage de la structure de support 5 sur la structure d'appui au sol 6, le serrage des colliers 9 est tel qu'il permet la rotation, de préférence la rotation libre, de la structure de support 5 autour de son axe d'extension 400 qui est perpendiculaire à la direction de l'axe de rotation 100 de l'arceau 2.

La rotation de la structure de support 5 autour de son axe d'extension 400 permet de compenser les irrégularités statiques du sol, et permet notamment l'installation du suiveur solaire sur un sol présentant une pente. La structure d'appui au sol 6 peut alors s'étendre verticalement et l'axe de rotation 100 de l'arceau 2 s'étendre parallèlement à la pente.

Une fois que la structure de support 5 a pivoté autour de son axe d'extension 400 pour compenser les irrégularités statiques du sol, par exemple pour que l'axe de rotation 100 de l'arceau 2 s'étende parallèlement à la pente, les colliers 9 sont alors serrés de manière à empêcher la rotation de la structure de support 5 autour de son axe d'extension 400.

Comme illustré aux figures 2 et 3, les dispositifs de guidage 3 comportent en outre chacun au moins deux butées latérales 10 situées de part et d'autre de l'arceau 2. Les butées latérales 10 sont chacune fixée sur une plaque de montage 7 des dispositifs de guidage 3 et sont situées entre les deux plaques 7, en regard des flancs 11 de l'arceau 2.

L'arceau 2 comporte des extensions latérales 12 de part et d'autre de l'arceau 2 disposées entre les butées latérales 10 et les galets 4 des dispositifs de guidage 3.

L'utilisation de butées latérales 10 permet d'éviter le soulèvement de l'arceau 2, par exemple causé par la force du vent, car les extensions latérales 12 de l'arceau 2 viennent alors en appui contre les butées latérales 10 des dispositifs de guidage 3.

Sur la figure 3, on a représenté le système 1 de la figure 2 en ôtant une des plaques de montage 7 de chaque dispositif de guidage 3 de manière à mieux voir les galets 4 et les butées latérales des dispositifs de guidage 3.

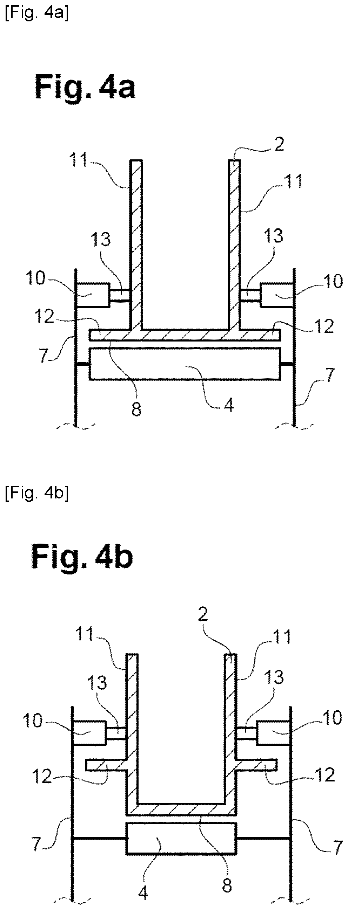

Comme illustré aux figures 4a à 4c, l'arceau 2 comporte un profilé présentant une section en forme de « U ». Les grands côtés du « U » forment les flancs 11 de l'arceau 2 et sont reliés l'un à l'autre par le petit côté formant le bord radialement externe qui porte la bande de roulement 8 de l'arceau 2.

Les extensions latérales 12 de l'arceau 2 peuvent s'insérer dans le prolongement du bord radialement externe de l'arceau 2, comme illustré à la figure 4a, ou au niveau des flancs 11 de l'arceau 2, comme illustré à la figure 4b.

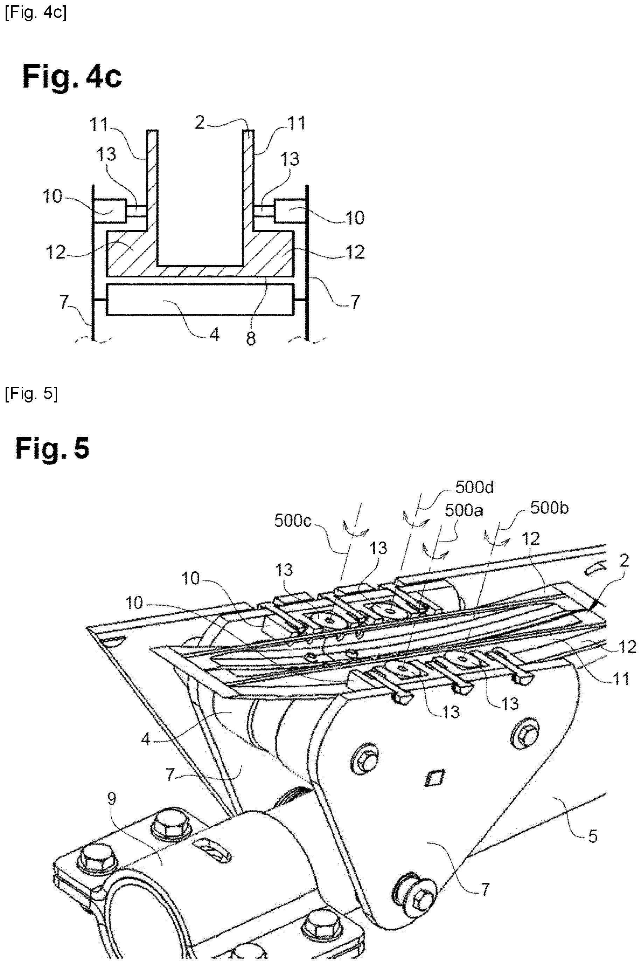

Les extensions latérales 12 de l'arceau 2 ont une d'épaisseur environ égale à celle des parois du profilé en forme de « U » de l'arceau 2, comme illustré aux figures 4a et 4b. Par exemple, l'épaisseur des extensions latérales est comprise entre 3 et 5 mm. En variante, les extensions latérales 12 ont une épaisseur plus importante que celle des parois du profilé en forme de « U » de l'arceau 2, comme illustré à la figure 4c. Par exemple, l'épaisseur des extensions latérales est comprise entre 5 et 20 mm.

Les butées latérales 10 sont immobilisés sur les plaques de montage 7 par des moyens de fixation tels que le rivetage ou le vissage.

Comme illustrés aux figures 4a à 4c et à la figure 5, les butées latérales 10 de chaque dispositif de guidage 3 comporte deux roulettes de guidage 13 axial chacune mobile en rotation autour d'un axe de rotation 500a, 500b, 500c, 500d s'étendant selon une direction perpendiculaire à la direction de l'axe de rotation 100 de l'arceau 2 et configurée pour venir en contact avec les flancs 11 de l'arceau 2.

Les roulettes de guidage 13 axial sont reçues dans des logements ménagés dans les butées latérales 10.

Les roulettes de guidage 13 axial permettent de guider axialement l'arceau 2, notamment de manière à le maintenir centré entre les deux butées latérales 10 de chaque dispositif de guidage 3 et à reprendre les efforts axiaux du suiveur solaire, en particulier lorsque ce dernier est installé dans une pente.

De préférence, les roulettes de guidage 13 axial sont montées libre en rotation.

En plus d'être mobiles en rotation autour de leurs axes respectifs 300a, 300b, les dispositifs de guidage 3 sont chacun mobile en translation le long de leurs axes respectifs 300a, 300b. Cela permet avantageusement de rattraper la dilatation thermique du suiveur solaire qui peut avoir lieu par exemple entre l'hiver et l'été, et donc de limiter les efforts liés à la dilatation thermique du suiveur solaire.

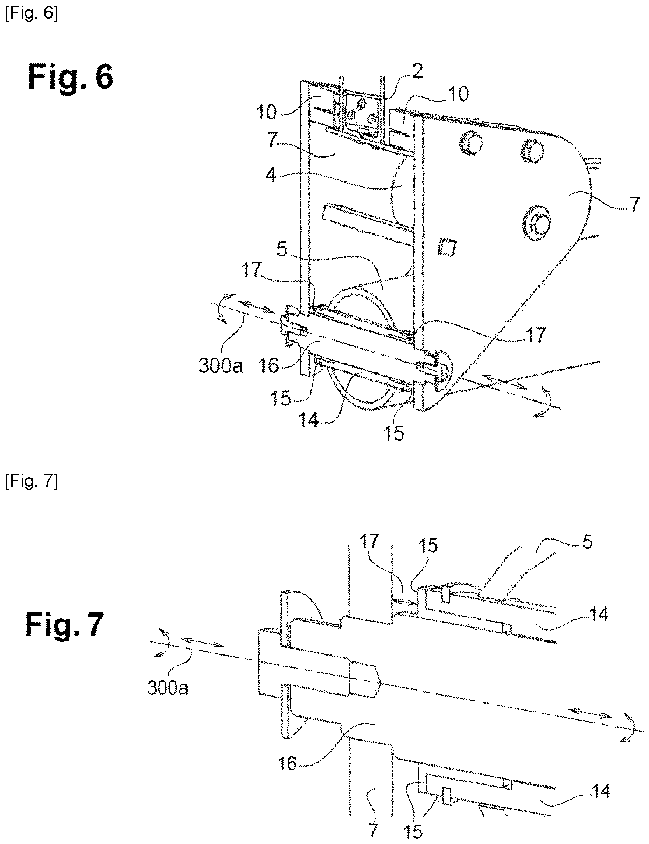

Comme illustré aux figures 6 et 7, les dispositifs de guidage 3 comportent chacun une tige 16 s'étendant le long l'axe de rotation 300a, 300b du dispositif de guidage 3 et permettant le montage du dispositif de guidage 3 sur la structure de support 5.

La tige 16 relie les deux plaques de montage 7 et s'insère dans l'orifice traversant ménagé dans la structure de support 5.

La tige 16 est entourée par un organe de roulement 14, de préférence métallique, par exemple en acier ou en inox, qui comporte à chacune de ses extrémités un palier lisse 15 à collerette, de préférence en matériau composite et/ou à base de polymères, par exemple en un matériau à base de plastique. Cet organe de roulement 14 permet le mouvement en translation le long de l'axe 300a ainsi que le mouvement en rotation du dispositif de guidage autour de l'axe 300a.

Les dispositifs de guidage 3 sont chacun initialement monté sur la structure de support 5 de manière à être centré par rapport à la structure de support 5 avec un jeu 17, d'environ 10 mm, de chaque côté entre la collerette du palier lisse et la face interne de la plaque de montage 7 du dispositif de guidage 3.

Ce jeu 17 d'environ 10 mm de chaque côté permet des mouvements de translation du dispositif de guidage 3 le long de l'axe 300a avec une amplitude de 20 mm. En variante ce jeu 17 peut être de 20 mm voire de 30 mm de chaque côté de manière à permettre une amplitude de mouvement de translation respectivement de 40 mm voire de 60 mm.

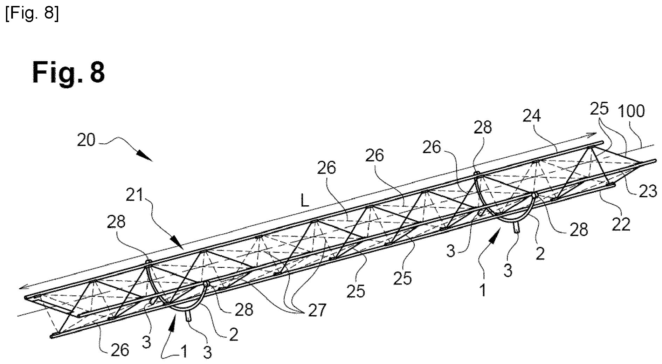

On a illustré à la figure 8, un exemple de suiveur solaire 20 comportant :
- deux systèmes 1 de guidage en rotation selon l'invention,
- une structure de soutien 21 s'étendant longitudinalement selon la direction de l'axe de rotation 100 des arceaux 2 et supportant, notamment à elle seule, une table (non représentée) équipée d'au moins un dispositif de collecte d'énergie solaire et s'étendant longitudinalement selon la direction de l'axe de rotation 100 de l'arceau 2.

La structure de soutien 21 est une poutre à treillis rigide comportant des longerons 22, 23, 24, des traverses 25 et des tirants 26.

Dans l'exemple illustré à la figure 8, la structure de soutien comporte trois longerons 22, 23, 24 qui s'étendent parallèlement entre eux selon la direction de l'axe de rotation 100 des arceaux 2, et un grand nombre de traverses 25 réparties le long de l'axe de rotation 100 de l'arceau 2 pour relier mécaniquement chacun des trois longerons deux à deux. Les traverses 25 sont disposés relativement aux trois longerons 22, 23, 24 de façon à former une pluralité de triangles 27 parallèles entre eux et contenu chacun dans un plan perpendiculaire à la direction de l'axe de rotation 100 des arceaux 2.

Chaque arceau 2 est monté sur la structure de soutien 21 de façon à entrainer en rotation la structure de soutien 21 autour de l'axe de rotation 100 des arceaux 2.

Chaque arceau 2 est monté à la structure de soutien 21 du suiveur solaire 20 au moins à chacune de ses extrémités 28. Les arceaux 2 supportent ainsi à eux seuls la structure de soutien 21 du suiveur solaire 20.

## Revendications

1. Système (1) de guidage en rotation d'un suiveur solaire, comportant :
- au moins un arceau (2) montable sur le suiveur solaire et mobile en rotation autour d'un axe de rotation (100),
- au moins deux dispositifs de guidage (3) configurés pour guider en rotation l'arceau (2),
les dispositifs de guidage (3) comportant chacun au moins deux galets (4) chacun mobile en rotation autour d'un axe de rotation (200a, 200b, 200c, 200d) s'étendant selon la direction de l'axe de rotation (100) de l'arceau (2) et configuré pour venir en contact et supporter l'arceau (2),
les dispositifs de guidage (3) étant chacun mobile en rotation autour d'un axe de rotation (300a, 300b) s'étendant selon la direction de l'axe de rotation (100) de l'arceau (2), et pouvant chacun être entrainé en rotation par l'arceau (2) de façon à permettre le contact de chaque galet (4) de chaque dispositif de guidage (3) avec l'arceau (2).

2. Système de guidage selon la revendication 1, les axes de rotation (200a, 200b, 200c, 200d) des galets (4) étant strictement parallèles.

3. Système de guidage selon la revendication 1 ou 2, les dispositifs de guidage (3) étant fixés sur une même structure de support (5) s'étendant selon une direction perpendiculaire à la direction de l'axe de rotation (100) de l'arceau (2), la structure de support (5) étant notamment un tube ou une barre.

4. Système de guidage selon l'une quelconque des revendications précédentes, les dispositifs de guidage (3) comportant chacun au moins deux butées latérales (10) situées de part et d'autre de l'arceau (2) et l'arceau (2) comportant des extensions latérales (12) de part et d'autre de l'arceau (2) disposées entre les butées latérales (10) et les galets (4) des dispositifs de guidage (3).

5. Système de guidage selon la revendication 4, les butées latérales (10) de chaque dispositif de guidage (3) comportant chacune au moins une roulette (13) de guidage axial mobile en rotation autour d'un axe de rotation (500a, 500b, 500c, 500d) s'étendant selon une direction perpendiculaire à la direction de l'axe de rotation (100) de l'arceau (2) et configurée pour venir en contact avec les flancs (11) de l'arceau (2).

6. Système de guidage selon l'une quelconque des revendications précédentes, les dispositifs de guidage (3) étant chacun mobile en translation le long de leur axe de rotation (300a, 300b).

7. Suiveur solaire (20) comportant :
- au moins un système (1) de guidage en rotation selon l'une quelconque des revendications 1 à 6,
- au moins une table équipée d'au moins un dispositif de collecte d'énergie solaire, la table s'étendant longitudinalement selon la direction de l'axe de rotation (100) de l'arceau (2),
- au moins une structure de soutien (21), notamment une poutre en treillis, s'étendant longitudinalement selon la direction de l'axe de rotation (100) de l'arceau (2) et supportant, notamment à elle seule, ladite table,
l'arceau (2) étant monté sur la structure de soutien (21) de façon à entrainer en rotation la structure de soutien (21) autour de l'axe de rotation (100) de l'arceau (2).

8. Suiveur solaire selon la revendication 7, comportant au moins deux systèmes (1) de guidage en rotation selon l'une quelconque des revendications 1 à 6, chaque arceau (2) étant monté sur la structure de soutien (21) de façon à entrainer en rotation la structure de soutien (21) autour de l'axe de rotation (100) des arceaux (2).

9. Champ solaire comportant une pluralité de suiveurs solaires (20) selon la revendication 7 ou 8.

10. Champ solaire selon la revendication 9, au moins certains suiveurs solaires (20) étant disposés parallèlement les uns aux autres, notamment selon la direction Nord/Sud.
